# EUROPEAN PATENT APPLICATION

(11) **EP 3 961 001 A1**
(43) Date of publication of application: **02.03.2022**
(21) Application number: 21191410.6
(22) Date of filing: 13.08.2021
(51) Int. Cl.: F01D 25/28, G01B 11/27

(54) **GAS TURBINE ALIGNMENT ASSEMBLY AND METHOD**

(30) Priority: 25.08.2020 PL 43508720; 18.09.2020 US 202017025660
(71) Applicant: General Electric Company, Schenectady, NY 12345 (US)
(72) Inventor: NGUYEN, Tho V., Schenectady, 12345 (US); HUYNH, Tuy C., Schenectady, 12345 (US); SETHI, Vineet, Schenectady, 12345 (US); DZIECIOL, Piotr Krzysztof, 02-256 Krakowska (PL)
(74) Representative: Openshaw & Co.

(57) **Abstract**

A gas turbine system (10) includes a memory (74) storing instructions and a processor (76) configured to execute the instructions to cause the processor (76) to perform various functions. The functions include receiving a data signal (52) indicative of a relative position and/or orientation between a gas turbine (12) of the gas turbine system (10) and a load (14) of the gas turbine system (10), and determining a target movement of the gas turbine (12), the load (14), or both based on the data signal (52) indicative of the relative position and/or orientation. The functions also include determining, based on the target movement, at least one control command (82) of an
adjustment pad (90), a hydraulic cylinder (92), or both of an alignment assembly (24), the alignment assembly (24) being coupled to the gas turbine (12) or the load (14). The functions also include controlling a movement of the adjustment pad (90), the hydraulic cylinder (92), or both via the at least one control command (82).

## Description

### BACKGROUND

The subject matter disclosed herein relates to gas turbine systems and, more particularly, to systems and methods for aligning and/or leveling gas turbine system components.

Gas turbines generally include a compressor, a combustor, and a turbine. Each of these components may be coupled to a shaft that will rotate during operation of the gas turbine. The shaft of the turbine may be coupled to a load or a shaft of the load. The load may be any suitable device that may generate power via rotation of the shaft. For example, a gas turbine may be coupled to a generator to generate power for an electrical power grid. In some traditional cases, the gas turbine may be aligned with the generator manually, such as by adjusting fixators that are then cemented into place after alignment has been achieved. Traditional systems may require long alignment and/or installation procedures that contribute to pre-operational costs.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the subject matter may encompass a variety of forms that may be similar to or different from the embodiments set forth below.

In a first embodiment, a system includes a memory device and a processor. The processor may execute the instructions of the memory to cause the processor to receive a data signal indicative of a relative position of a gas turbine, load, or both. The processor may further determine a target movement for a component of a gas turbine based on the data signal indicative of the relative position. The processor may determine, based on the target movement, a control command of an alignment assembly coupled to the gas turbine or the load, and then control a movement of the alignment assembly.

In a second embodiment, a system includes a first laser alignment device corresponding to a gas turbine of the gas turbine system and a second laser alignment device corresponding to a load of the gas turbine system, where the first and second laser alignment devices are configured to communicate to determine a data signal indicative of a relative positon and/or orientation of the gas turbine and the load. The system further includes at least one adjustment pad configured to move the gas turbine, the load or both, and a controller configured to receive the data signal from the first laser alignment device, the second laser alignment device, or both, to determine a target movement of the gas turbine, the load, or both based on the data signal indicative of the relative position and/or orientation, to determine at least one control command of the at least one adjustment pad based on the target movement, and to control a movement of the at least one adjustment pad via the at least one control command.

In a third embodiment, a method includes receiving, from a laser alignment assembly, a data signal indicative of a relative position and/or orientation of a component of a gas turbine system. The method further includes determining, via a controller, a target movement of the component of the gas turbine system, and determining, via the controller, at least one control command of a component of a laser alignment assembly. The method also includes controlling, via the controller, a movement of the component of the laser alignment assembly.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates a block diagram of an embodiment of a gas turbine system, in accordance with an aspect of the present disclosure;
FIG. 2 is a block diagram of a side view of an embodiment of the gas turbine system of FIG. 1 having an alignment assembly for aligning a gas turbine of the gas turbine system with a generator of the gas turbine system, in accordance with an aspect of the present disclosure;
FIG. 3 is a block diagram of an embodiment of a control system that may be employed to control the alignment assembly of FIG. 2, in accordance with an aspect of the present disclosure;
FIG. 4 is a schematic illustration of a perspective view of an embodiment of the gas turbine system, the corresponding alignment assembly, and the corresponding control system of the alignment assembly of FIGS. 2 and 3, in accordance with an aspect of the present disclosure;
FIG. 5 is a schematic illustration of a top view of an adjustment pad of an embodiment of the alignment assembly of FIG. 2, in accordance with an aspect of the present disclosure;
FIG. 6 is a schematic illustration of a side view of an embodiment of an adjustment pad of the alignment assembly of FIG. 2, in accordance with an aspect of the present disclosure;
FIG. 7 is a process flow diagram illustrating an embodiment of a method of aligning a shaft of a gas turbine and a shaft of a load, in accordance with an aspect of the present disclosure; and
FIG. 8 is a flow chart of an embodiment of a method of aligning the gas turbine and the generator of the gas turbine system of FIG. 2, in accordance with an aspect of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

As discussed in detail below, the disclosed embodiments include systems and methods for aligning and/or leveling components of a gas turbine system, such as a gas turbine and a generator of the gas turbine system. The disclosed embodiments include an alignment assembly that may help reduce time involved in aligning the shafts between the turbine and the generator when setting up the system, thereby enabling a reduced cost associated with installation of the gas turbine system and/or an increase in effective efficiency of the gas turbine system (e.g., compared to traditional embodiments). In certain embodiments, the alignment assembly may include an emitter and receiver (e.g., laser alignment equipment) coupled to a gas turbine (or shaft thereof) and generator (or shaft thereof) and a control system configured to utilize feedback from the emitter and receiver to adjust the position of the gas turbine system components. In certain embodiments, the control system for operating the alignment assembly may include a hydraulic system (e.g., an adjustment pad and/or a hydraulic cylinder) to assist the movement of various components. Further, the alignment assembly may be removable after alignment, which may enable the assembly system to be reusable and/or to be utilized with a number of gas turbine systems. As noted above, the automated alignment assembly may reduce a cost associated with installation of the gas turbine system compared to traditional embodiments.

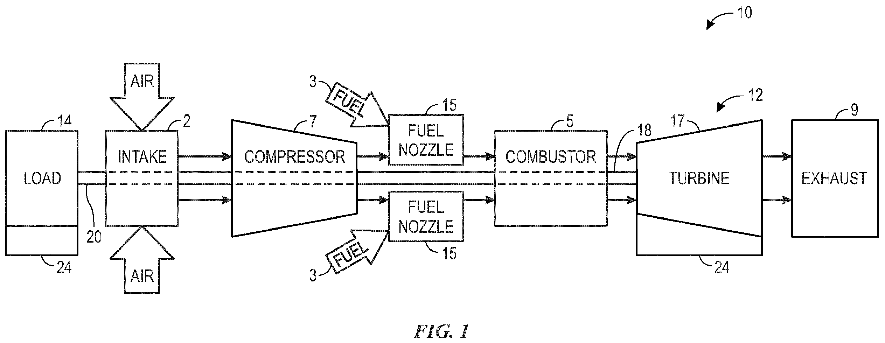

Turning now to the drawings, FIG. 1 is a block diagram an embodiment of a gas turbine system 10 having an alignment assembly 24. The gas turbine system 10 may include a gas turbine 12 (e.g., turbine assembly or component, which may include a compressor 7, combustors 5, a turbine 17, etc.) and a load 14. The load 14 may be any suitable device that may generate power via rotation of a shaft, such as a generator or other external mechanical load. For example, the gas turbine 12 may be coupled to a generator to generate power for an electrical power grid. In the gas turbine system 10, a compressor 7 may receive air from an air intake 2 and may compress it into pressurized air using rotating blades within the compressor 7. The pressurized air may be fed into the combustor 5, where it may mix with fuel 3 delivered by the fuel nozzles 15 to create an air-fuel mixture that may be routed into a combustor 5. The combustor 5 may ignite and combust the air-fuel mixture and then pass hot pressurized exhaust gas through turbine blades of the turbine 17 toward an exhaust outlet 9, thereby driving the shaft 18 of the gas turbine 12 to rotate. The coupling between blades in the turbine 17 and the turbine shaft 18 cause the rotation of the turbine shaft 18. The rotation of the turbine shaft 18 may then cause rotation of the load shaft 20, thus generating power.

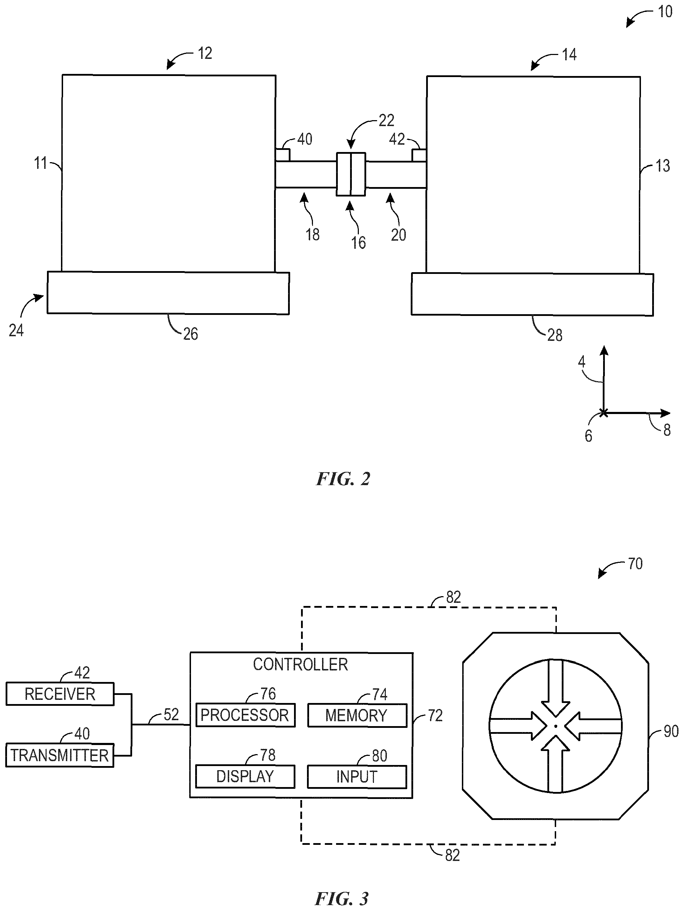

FIG. 2 is a block diagram of a side view of an embodiment of the gas turbine system 10 of FIG. 1 having an alignment assembly 24 for aligning a gas turbine 12 of the gas turbine system 10 with a load 14 of the gas turbine system 10. Now referring to FIG. 2, the previously mentioned components of the gas turbine 12 (e.g., the compressor 7, the combustors 5, the turbine 17, etc.) may be supported within a turbine housing 11 and similarly the load 14 (e.g., load assembly or component) may be supported within a load housing 13. The gas turbine 12 and the load 14 may be coupled through a turbine-load shaft 16. The turbine-load shaft 16 may include the turbine shaft 18 and the load shaft 20 connected through a coupling 22 (e.g., mechanical coupling) at a position between the gas turbine 12 and the load 14 or at a position within the gas turbine 12 or the load 14.

To facilitate discussion, the alignment assembly 24 and its components may be described with reference to a vertical axis or direction 4, a lateral axis or direction 6, and a longitudinal axis or direction 8. The alignment assembly 24 may be positioned vertically 4 below the gas turbine system 10 (e.g., during installation, assembly, and/or alignment operations) and may be used to align various components of the gas turbine system 10, such as the gas turbine 12 and the load 14, and/or the turbine shaft 18 and the load shaft 20. The alignment assembly 24 may include a turbine foundation 26 positioned vertically 4 below the gas turbine 12 and a load foundation 28 positioned vertically 4 below the load 14. The turbine foundation 26 and the load foundation 28 each include one or more hydraulic cylinders to permit adjustment of the respective foundations 26, 28.

Additionally, or alternatively, the alignment assembly 24 may include a transmitter 40 and a receiver 42. The alignment assembly 24 may employ any type of transmitter 40 and the receiver 42 configured to measure an alignment between the components. For example, the transmitter 40 may emit one or more lasers that may measure and/or provide an indication of the alignment with receiver 42 between the turbine shaft 18 and the load shaft 20. That is, the transmitter 40 may be a laser (e.g., infrared) emitter and the receiver 42 may be a laser (e.g., infrared) receiver. In the illustrated embodiment, the receiver 42 may be positioned on the load shaft 20 and the transmitter 40 may positioned on turbine shaft 18. However, the receiver 42 may be positioned on the turbine shaft 18, on the load shaft 20, or at any other location about the alignment assembly 24 and/or the gas turbine system 10 suitable for measuring the alignment between the gas turbine 12 and the load 14 at the turbine shaft 18 and the load shaft 20. Similarly the transmitter 40 may be positioned on the turbine shaft 18, on the load shaft 20, or at any other location about the alignment assembly 24 and/or the gas turbine system 10 suitable for measuring the alignment between the gas turbine 12 and the load 14 at the turbine shaft 18 and the load shaft 20. In some embodiments, the transmitter 40 and/or the receiver 42 may be coupled to a controller 72 configured to control the movement of turbine foundation 26 and the load foundation 28 based at least in part on signals received from the transmitter 40 and/or the receiver 42, or an intervening component that monitors or relays data from the transmitter 40 and/or the receiver 42, as discussed in greater detail with reference to FIG. 3.

FIG. 3 is a block diagram of an embodiment of a control system 70 that may be employed within the alignment assembly 24 of FIG. 2. A controller 72 (e.g., electronic controller) of the alignment assembly 24 may be configured to receive input from one or more sensors, including the transmitter 40 and/or the receiver 42. In some embodiments, there may be one or more transmitters 40 and/or receivers 42 that may be positioned anywhere suitable for measuring the alignment between the gas turbine 12 and the load 14 at the turbine shaft 18 and the load shaft 20, as previously discussed. The controller 72 may be configured to monitor alignment characteristics (e.g., horizontal, vertical, circumferential alignment) between the transmitter 40 and the receiver 42, such that the proper alignment of the transmitter 40 and the receiver 42 may lead to (e.g., is indicative of) the proper alignment of turbine shaft 18 and the load shaft 20. In some embodiments, the receiver 42 may consist of a single device or a plurality of devices that ensure the rotation of the turbine shaft 18 and/or the load shaft 20 are in line such that the coupling of the turbine shaft 18 and the load shaft 20 for further rotation is possible.

The transmitter 40 and the receiver 42 may be further configured to send one or more signals 52 indicative of the alignment or alignments therebetween. For example, the transmitter(s) 40 may emit a laser (e.g., infrared) signal and the receiver(s) 42 may receive the laser (e.g., infrared) signal. The controller 72 may receive a signal from the receiver 42 indicative of the receiver 42 receiving the laser (e.g., infrared) signal and/or a location/orientation at which the receiver 42 received the laser (e.g., infrared) signal.

The controller 72 may be positioned proximate to or remote from the gas turbine system 10 and may be configured to receive the signal 52 from the transmitter 40 and/or receiver 42, or an intervening data relay component. The controller 72 may include a memory 74, a processor 76, a display 78, and/or an input 80 (e.g., for manual input of certain data). In operation, the controller 72 may receive the signal 52 at the processor 76 (e.g., via an input port electronically coupled to the above-described receiver 42, transmitter 40, or intervening data relay component). In some embodiments, input signals and/or any control signals sent to and/or by the controller 72 may be saved in the memory 74. In some embodiments, indications of the input signals and/or the control signals may be displayed to an operator via the display 78. In some embodiments, the input 80 may be used by an operator to provide instructions to the controller 72 to control one or more adjustment pads 90 (discussed below), which are part of the alignment assembly 24. In some embodiments, the controller 72 may determine and send one or more control signals 82, as suggested above, configured to control one or more adjustment pads 90 via the processor 76.

By controlling the adjustment pads 90, the controller 72 may control the alignment of the turbine shaft 18 and the load shaft 20, and/or the alignment of the gas turbine 12 and the load 14. In some embodiments, physical structures of the gas turbine 12 or the load 14 may not be entirely rigid. Thus, the controller 72 may determine a control command based on an estimated movement of the gas turbine 12 and/or the load 14, but the control command may not cause the estimated movement of the gas turbine and/or the load 14. For example, certain components of the gas turbine 12 may move relative to each other during the implementation of the control command, which may cause the actual movement to deviate from the estimated movement. Thus, an iterative automated approach may be employed by the controller 72 until alignment is achieved. Further, the controller 72 may log, in the memory 74 of the controller 72, actual movement of the gas turbine 12 and/or the load 14 in response to each control command, in addition to the estimated movement associated with the control command. Over time, the controller 72 may learn, based on the log of the actual movement, the estimated movement, and the associated control command, more precise movement commands. These and other features will be described in detail below with reference to later drawings.

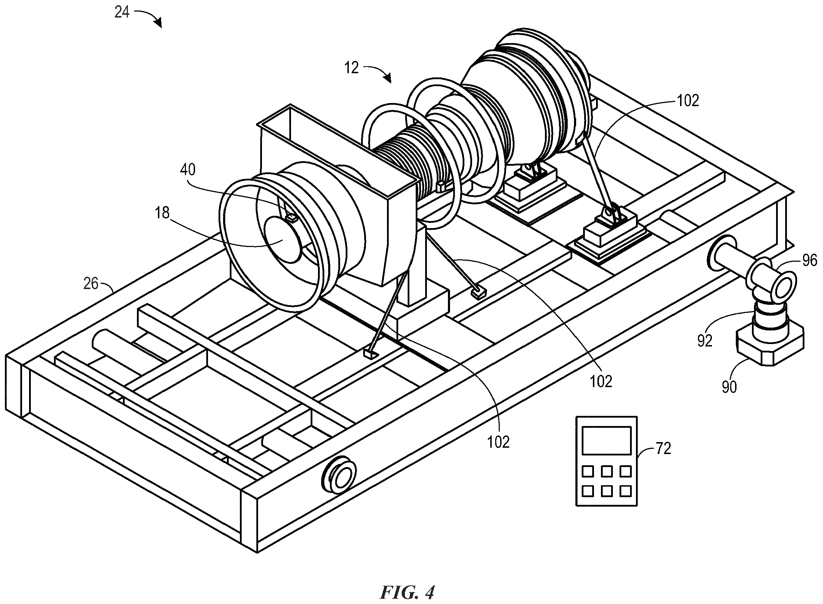

FIG. 4 is a schematic illustration of a perspective view of an embodiment of the alignment assembly 24 of FIGS. 2 and 3, including the adjustment pad 90. In some embodiments, an adjustment pad 90 is connected to the turbine foundation 26. Additionally, or alternatively, another instance of the adjustment pad 90 may be connected to the load foundation 28 (not shown). The alignment assembly 24 may deploy the transmitter 40 and the receiver 42 anywhere appropriate on the gas turbine 12 and the load 14, to aid alignment as previously described. Data from the transmitter 40 and/or receiver 42 may be communicated to the controller 72 (e.g., via a wired or wireless connection) so that adjustments to the turbine foundation 26 or load foundation 28 may be made via control of the adjustment pad 90 by the controller 72.

In some embodiments, the adjustment pad 90 is coupled to the alignment assembly 24 by an object 92 (e.g., a hydraulic jack, such as a cylindrical hydraulic jack) that may extend from the adjustment pad 90 to an adapter 96 that is connected to the turbine foundation 26 or the load foundation 28. The object 92 may be mechanically coupled to the adapter 96. Although there is only one adjustment pad 90 shown in FIG. 4, any number necessary to make the proper adjustments is contemplated by the present disclosure. For example, there may be two adjustment pads 90 at each end of the turbine foundation 26 and/or the load foundation 28, such that a total of eight adjustment pads 90 are employed to align the gas turbine 12 and the load 14. In one embodiment, each pair of oppositely disposed adjustment pads 90 are disposed on the sides of the turbine foundation 26 extending in the longitudinal direction 8 and are disposed proximate to a respective side of the turbine foundation 26 extending in the lateral direction 6.

The gas turbine 12 may be secured to the turbine foundation 26 by way of straps 102, which may be ropes, rods (e.g., metal rods), or some other coupling mechanism. In some embodiments, the straps 102 are rigid and secure the gas turbine 12 to the turbine foundation 26. In some embodiments, the straps are not rigid, and they may allow the gas turbine 12 to move in a relatively unexpected fashion in response to an adjustment made for alignment. As previously described, the controller 72 may determine a control command based on an estimated movement of the gas turbine 12 and/or the load 14, but the control associated with the control command may not cause the estimated movement of the gas turbine 12 and/or the load 14. For example, because the straps 102 may not be rigid, the actual movement of the gas turbine 12 may deviate from the estimated movement determined by the controller. Thus, an iterative automated approach may be employed by the controller 72 until alignment is achieved. Further, the controller 72 may log actual movement of the gas turbine 12 and/or the load 14 in response to each control command, in addition to the estimated movement associated with the control command. Over time, the controller 72 may learn, based on the log of the actual movement, the estimated movement, and the associated control command, more precise movement commands. These and other features will be described in detail below with reference to later drawings.

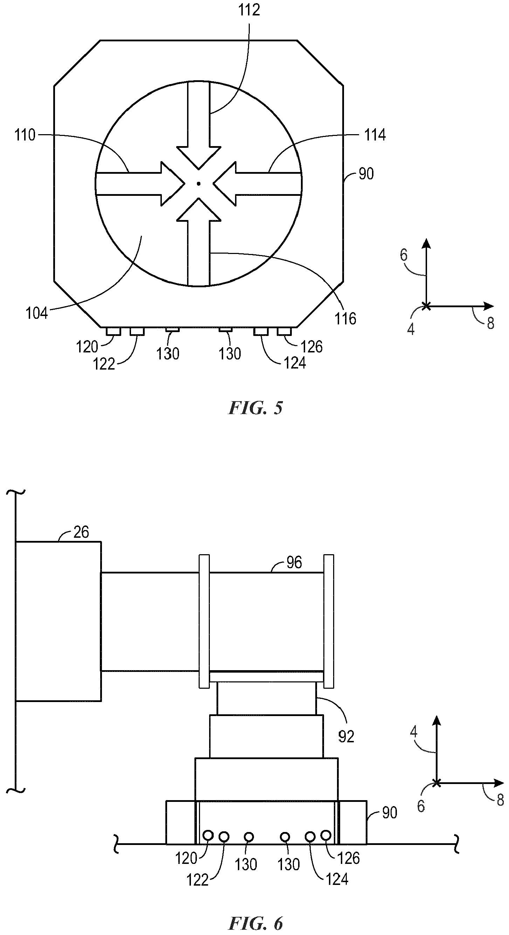

FIG. 5 is a top view of an embodiment of the adjustment pad 90. The adjustment pad 90 may be powered electrically or hydraulically to cause movement on the base 104 of the pad 90. In some embodiments, the object 92 (e.g., hydraulic cylinder) may be placed on the base 104 of the adjustment pad 90, such that the object 92 may move along the lateral axis or direction 6 which corresponds to motions 112 and 116 or along the longitudinal axis or direction 8 which corresponds to motions 110 and 114. Further, the object 92 (e.g., hydraulic cylinder) may enable movement of the gas turbine (or corresponding turbine foundation 26) in the vertical direction 4. Motion 110 (e.g., motion in the longitudinal direction) may be achieved by a hydraulic connection to port 120, motion 116 (e.g., motion in the lateral direction) may be achieved by a hydraulic connection to port 122, motion 112 (e.g., motion in the lateral direction) may be achieved by a hydraulic connection to port 124, and motion 114 (e.g., motion in the longitudinal direction) may be achieved by a hydraulic connection to port 126. Additionally, or alternatively, motion in the various direction can also be achieved by electrical means. Ports 130 may function as transducers to power the adjustment pad 90.

With the foregoing in mind, FIG. 6 illustrates a side view of an embodiment of the adjustment pad 90 coupled to an adapter 96 of the alignment assembly 24. In some embodiments, the adapter 96 may be attached to the turbine foundation 26 at its ends. Although a turbine foundation 26 is illustrated, similarly a load foundation 28 may be used. Additionally, or alternatively, the turbine foundation 26 may include an adapter 96 at each terminal end, totaling eight adapters 96 for each turbine foundation 26. As previously mentioned, the object 92 (e.g., hydraulic cylinder) may be coupled to the adapter 96, or in some embodiments loosely connected. When the controller 72 directs the adjustment pad 90 to move in a particular direction, such as motion 110, motion 112, motion 114, or motion 116, the adapter 96 will correspondingly move the turbine foundation 26, which in turn will move the gas turbine 12 accordingly. Further, the object 92 (e.g., hydraulic cylinder) may be controlled to enable movement of the turbine foundation 26 in the vertical direction 4.

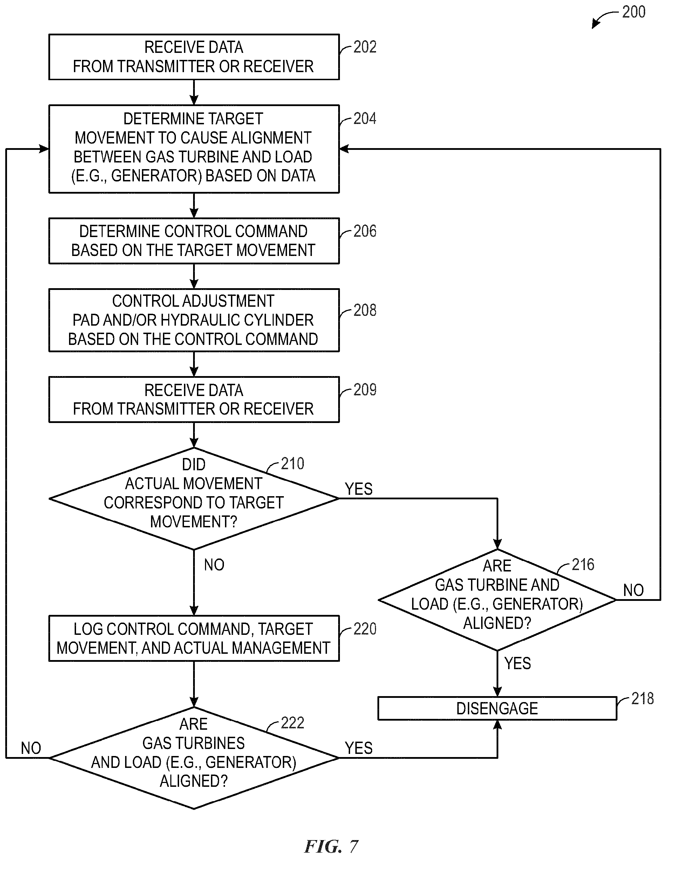

FIG. 7 is a process flow diagram illustrating an embodiment of a method 200 for aligning components of the gas turbine system 10 of FIG. 2, such as the turbine shaft 18 of the gas turbine 12 and the load shaft 20 of the load 14. The method 200 may include receiving (block 202), via the transmitter 40 and/or the receiver 42, measurement or alignment data between the two devices. In some embodiments, the receiver 42 may include a signal detection grid coupled to the gas turbine 12, load 14, turbine shaft 18, and/or load shaft 20 that detects a location and/or orientation of a signal received from the transmitter 40. The transmitter 40 and/or receiver 42 may communicate the measurement data to the controller 72.

The method 200 also may include determining (block 204) a target movement of one or more gas turbine system components needed for alignment, or to work toward alignment, between the gas turbine 12 and the load 14. For example, the controller 72 may determine that the measurement data indicates that a lateral movement (in the lateral or longitudinal directions), a vertical movement, or a combined lateral and vertical movement of one or more gas turbine system components may facilitate alignment.

After determining the target movement, the controller 72 determines (block 206) control commands based on the target movement. In some embodiments, the controller 72 determines a command for operating the adjustment pad 90 and/or the object 92 (e.g., hydraulic cylinder) intended to cause the target movement. For example, the controller 72 may determine a command for controlling the adjustment pad 90 to move in a certain lateral direction, and/or the controller may determine a command for controlling the object 92 to move in a vertical direction.

The controller 72 controls (block 208) the adjustment pad 90 and/or the object 92 (e.g., hydraulic cylinder) based on the control command. For example, the controller 72 may determine that vertical and horizontal adjustments need to be made to the components of the gas turbine system 10, so the adjustment pad 90 and/or the object 92 (e.g., hydraulic cylinder) may be controlled in an attempt to cause the target movement.

After the movements, the controller 72 receives (block 209), via the transmitter 40 and/or the receiver 42, a second set of measurement or alignment data between the two devices. For example, as previously described, the receiver 42 may include a signal detection grid coupled to the gas turbine 12, the load 14, the turbine shaft 18, and/or the load shaft 20 that detects the transmitter 40 based on the location of the emission from the transmitter 40 on the grid. Then, the transmitter 40 and/or the receiver 42 communicates the measurement data to the controller 72. In other embodiments, the receiver 42 may include a point detector.

The method 200 also includes determining (block 210) if the actual movement of the gas turbine system 10 corresponds to the target movement. For example, as previously described, the physical structure of the gas turbine system 10 and/or the load 14 may not be rigid. For this reason, the actual movement caused by the adjustment pad 90 and/or the object 92 (e.g., hydraulic cylinder) may deviate from the target movement.

If the controller determines (block 210) that there is a difference between the actual movement and target movement, then the controller may log (block 220) the control command, the target movement, and the actual movement, and a correspondence therebetween. In some embodiments, the controller 72 may utilize the logged data in future iterations to improve alignment procedures. For example, the controller 72 may learn, over time, more accurate or precise control commands (block 206) corresponding to the target movement (block 204).

It should be noted that, in certain circumstances, the gas turbine 12 and the load 14 may be aligned despite the target movement deviating from the actual movement. For example, the method 200 includes an iterative approach that works the gas turbine 12 and the load 14 toward alignment. Thus, in certain circumstances, the controller 72 may determine a target movement and a corresponding control command with the understanding that further target movements and corresponding control commands may be needed. That is, the determined target movement and corresponding control command may be executed with the understanding that further control is needed. In certain of these circumstances, the actual movement may deviate from the target movement such that alignment is achieved between the gas turbine 12 and the load 14. For this reason, after determining that the actual movement did not correspond to the target movement (block 210), and after logging the control command, the target movement, and the actual movement (block 220), the method 200 may include determining whether the gas turbine 12 and the load 14 (e.g., generator) are aligned (block 222) based on the data from block 209. If the gas turbine 12 and the load 14 (e.g., generator) are aligned, the control system may disengage (218) or be disengaged. If the gas turbine 12 and the load 14 (e.g., generator) are not aligned, the method 200 may return to block 204.

In the event the actual movement does correspond to the target movement at block 210, the method 200 may include the controller 72 then determining (block 216) whether the gas turbine 12 and the load 14 (e.g., generator) are aligned. In some embodiments, the controller 72 determines that the gas turbine 12 and the load 14 (e.g., generator) are aligned via the data from block 209. If the components of the gas turbine system 10 are aligned, then the system may then disengage (block 218). However, if it is determined that the turbine shaft 18 and the load shaft 20 (or some other components of the gas turbine 12 and the load 14) are not yet aligned, then another iteration of method 200 begins at block 204.

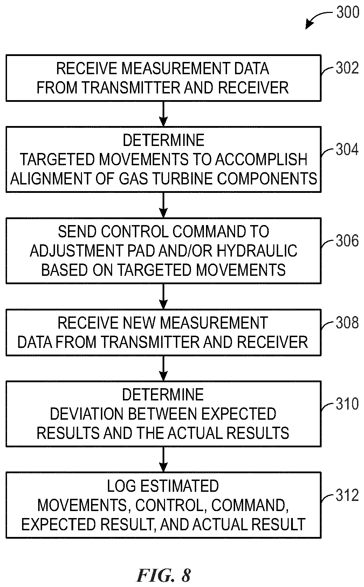

FIG. 8 is a flow diagram of an embodiment of a method 300 for aligning components of the gas turbine system 10 of FIG. 2, such as the gas turbine 12 and the load 14 (e.g., the turbine shaft 18 of the gas turbine 12 and the load shaft 20 of the load 14). In some embodiments, the method 300 may include receiving (block 302) a signal at the processor 76 of the controller 72 indicative of alignment data and/or measurement data between one component of a gas turbine system 10, such as the gas turbine 12, and another component of the gas turbine system 10, such as the load 14 (block 302). The signal indicative of the alignment may be received by the processor 76 from one or more sensors, such as the transmitter 40 and the receiver 42.

The method 300 may further include determining the current position of the components of the gas turbine system 10, such as the gas turbine 12, and another component of the gas turbine system 10, such as the load 14, and determining (block 304) a target movement that each component may need to realize in order to achieve proper alignment.

The method 300 may further include determining and sending (block 306) a control command to the adjustment pad 90 and/or the object 92 (e.g., hydraulic cylinder) for controlling the adjustment pad 90 and/or the object 92 to cause movement of the components of the gas turbine system 10 toward alignment.

In some embodiments, the method 300 may further include receiving (block 308) a new set of alignment data and/or measurement data from sensors, such as the transmitter 40 and the receiver 42, subsequent to the adjustment made by the adjustment pad 90 and/or the object 92 (e.g., hydraulic cylinder).

The method 300 may then determine that the alignment has not yet been achieved and determine (block 310) a deviation between an actual result (e.g., actual movement) of the adjustment and a target result (e.g., target movement) of the adjustment based on the new set of alignment data and/or measurement data from the sensors. In some embodiments, the deviation may be used as a factor in future iterations for determining the target movement and corresponding control command for properly aligning the components of the gas turbine system 10 (e.g., at blocks 304 and 306). Additionally, or alternatively, the actual movement may be used as a factor in future iterations for determining the target movement and corresponding control command for properly alignment the components of the gas turbine system 10 (e.g., at blocks 304 and 306).

The method 300 may then log (block 312) the target movement, control command, expected results, and actual results of the process. In some embodiments, this log can be used in future iterations of the method 300, such that more accurate control commands can be determined for achieving the target movements (e.g., blocks 304 and 306). The method 300 may be repeated in an iterative manner until alignment is achieved. As noted above, iterations of determining the control command may be sequentially improved as the controller 72 logs correlation between target movement and actual movement of the gas turbine system 10 components.

Technical effects of the disclosed embodiments include facilitating alignment and/or leveling of components, such as the turbine and the generator, of a gas turbine system, thus enabling more accurate alignment between the gas turbine system components. More accurate alignment between the components of the gas turbine may enable a reduction in wear of the components during operation and decrease the down time associated with the movement and setting up of the equipment. The alignment assembly may be controlled through a controller and/or various sensors, which may enable more efficient and/or more accurate automatic alignment without manual operator adjustment. The movement of the adjustment pads may be controlled such that the adjustment pads may be moved individually, in groups, or all together simultaneously, which may further enable more efficient and/or more accurate alignment of the gas turbine system components. The alignment assembly may include various sensors, such as the alignment sensor that may determine an alignment of the components of the gas turbine system, which may further enable more efficient and/or more accurate alignment. Further, the alignment assembly, including the adjustment pad, the controller, and/or the sensors may be removable once a desired alignment has been achieved and may be reusable under other gas turbine systems for alignment and/or leveling. In this manner, the alignment assembly may enable a cost savings because, unlike other alignment mechanisms, the adjustment pads may not be cemented in place under one gas turbine system once alignment is achieved, and a single alignment assembly may be used for alignment of many gas turbine systems.

This written description uses examples to disclose the subject matter discussed herein, including the best mode, and also sufficient disclosure to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A gas turbine system (10), comprising:
a memory (74) storing instructions; and
a processor (76) configured to execute the instructions to cause the processor (76) to:
receive a data signal (52) indicative of a relative position and/or orientation between a gas turbine (12) of the gas turbine system (10) and a load (14) of the gas turbine system (10);
determine a target movement of the gas turbine (12), the load (14), or both based on the data signal (52) indicative of the relative position and/or orientation;
determine, based on the target movement, at least one control command (82) of an adjustment pad (90), a hydraulic cylinder (92), or both of an alignment assembly (24), the alignment assembly (24) being coupled to the gas turbine (12) or the load (14); and
control a movement of the adjustment pad (90), the hydraulic cylinder (92), or both via the at least one control command (82).

2. The gas turbine system (10) of claim 1, wherein the alignment assembly (24) further comprises at least one laser alignment device (40, 42) configured to determine the relative position and/or orientation between the gas turbine (12) of the gas turbine system (10) and the load (14) of the gas turbine system (10), wherein the processor (76) is configured to receive the data signal (52) from the at least one laser alignment device (40, 42).

3. The gas turbine system (10) of claim 2, wherein the at least one laser alignment device (40, 42) comprises a laser transmitter (40), a laser receiver (42), or both.

4. The gas turbine system (10) of claim 2, wherein the at least one laser alignment device (40, 42) comprises an infrared transmitter (40), an infrared receiver (42), or both.

5. The gas turbine system (10) of claim 1, comprising:
a gas turbine shaft (18) of the gas turbine (12);
a load shaft (20) of the load (14);
a laser alignment transmitter (40) disposed on one of the gas turbine shaft (18) or the load shaft (20); and
a laser alignment receiver (42) disposed on the other of the gas turbine shaft (18) or the load shaft (20).

6. The gas turbine system (10) of claim 1, wherein the processor (76) is configured to execute the instructions to cause the processor (76) to:
receive an additional data signal (52) indicative of a changed relative position and/or orientation between the gas turbine (12) of the gas turbine system (10) and the load (14) of the gas turbine system (10); and
determine an actual movement of the gas turbine (12), the load (14), or both based on the additional data signal (52) indicative of the changed relative position and/or orientation.

7. The gas turbine system (10) of claim 6, wherein the processor (76) is configured to execute the instructions to cause the processor (76) to:
determine a difference between the actual movement and the target movement;
determine an additional target movement of the gas turbine (12), the load (14), or both based on the additional data signal (52) indicative of the changed relative position and/or orientation; and
determine an additional at least one control command (82) of the adjustment pad (90), the hydraulic cylinder (92), or both based on the additional target movement and the difference between the actual movement and the target movement.

8. The gas turbine system (10) of claim 7, wherein the processor (76) is configured to execute the instructions to cause the processor (76) to control an additional movement of the adjustment pad (90), the hydraulic cylinder (92), or both via the additional at least one control command (82).

9. The gas turbine system (10) of claim 1, wherein the processor (76) is configured to execute the instructions to cause the processor (76) to:
receive an additional data signal (52) indicative of a changed relative position and/or orientation between the gas turbine (12) of the gas turbine system (10) and the load (14) of the gas turbine system (10);
determine an actual movement of the gas turbine (12), the load (14), or both based on the additional data signal (52) indicative of the changed relative position and/or orientation;
determine an additional target movement of the gas turbine (12), the load (14), or both based on the additional data signal (52) indicative of the changed relative position and/or orientation; and
determine an additional at least one control command (82) of the adjustment pad (90), the hydraulic cylinder (92), or both based on the additional target movement and the actual movement of the gas turbine, the load (14), or both.

10. The gas turbine system (10) of claim 1, comprising:
the adjustment pad (90), wherein the adjustment pad (90) is configured to be controlled to cause lateral movement of one of the gas turbine (12) or the load (14) to which the alignment assembly (24) is coupled; and
the hydraulic cylinder (92), wherein the hydraulic cylinder (92) is configured to be controlled to cause vertical movement of one of the gas turbine (12) or the load (14) to which the alignment assembly (24) is coupled.

11. The gas turbine system (10) of claim 1, comprising:
the adjustment pad (90), wherein the adjustment pad (90) is configured to be controlled to cause movement of the gas turbine (12); and
an additional adjustment pad (90) configured to be controlled to cause movement of the load (14), the additional adjustment pad (90) being coupled to the load (14).

12. A method (200) for aligning a gas turbine system (10), comprising:
receiving (202), from a laser alignment assembly (24), a data signal (52) indicative of a relative position and/or orientation between a gas turbine (12) of the gas turbine system (10) and a load (14) of the gas turbine system (100);
determining (204), via a controller (72), a target movement of the gas turbine (12), the load (14), or both based on the data signal (52) indicative of the relative position and/or orientation;
determining (206), based on the target movement and via the controller (72), at least one control command (82) of an adjustment pad (90), a hydraulic cylinder (92), or both of an alignment assembly (24), the alignment assembly (24) being coupled to the gas turbine (12) or the load (14); and
controlling (208), via the controller (72), a movement of the adjustment pad (90), the hydraulic cylinder (92), or both via the at least one control command (82).

13. The method (200) of claim 12, comprising determining, via a laser transmitter (40) of the laser alignment assembly (24) and a laser receiver (42) of the laser alignment assembly (24), the relative position and/or orientation between the gas turbine (12) of the gas turbine system (10) and the load (14) of the gas turbine system (10).

14. The method (200) of claim 12, comprising:
receiving (209) an additional data signal (52) indicative of a changed relative position and/or orientation between the gas turbine (12) of the gas turbine system (10) and the load (14) of the gas turbine system (10);
determining (210) an actual movement of the gas turbine (12), the load (14), or both based on the additional data signal (52) indicative of the changed relative position and/or orientation;
determining (204) an additional target movement of the gas turbine (12), the load (14), or both based on the additional data signal (52) indicative of the changed relative position and/or orientation; and
determining (206) an additional at least one control command (82) of the adjustment pad (90), the hydraulic cylinder (82), or both based on:
the additional target movement; and
the actual movement or a difference between the actual movement and the target movement.

15. The method (200) of claim 12, comprising:
positioning a laser alignment transmitter (40) of the laser alignment assembly (24) on one of a gas turbine shaft (18) of the gas turbine (12) or a load shaft (20) of the load (14); and
positioning a laser alignment receiver (42) of the laser alignment assembly (24) on the other of a gas turbine shaft (18) or the load shaft (20).
